# EUROPÄISCHE PATENTSCHRIFT

(11) **EP 1 861 219 B1**
(45) Veröffentlichungstag und Bekanntmachung des Hinweises auf die Patenterteilung: **04.12.2013**
(21) Anmeldenummer: 06723629.9
(22) Anmeldetag: 22.03.2006
(51) Int. Cl.: B23B 31/02, B23P 11/02, B23Q 17/22, B23B 31/30, B23B 27/10

(54) **WERKZEUGHALTER**
TOOL HOLDER
PORTE-OUTIL

(30) Priorität: 23.03.2005 DE 102005013483
(43) Veröffentlichungstag der Anmeldung: 05.12.2007
(73) Patentinhaber: Franz Haimer Maschinenbau KG, 86568 Hollenbach-Igenhausen (DE)
(72) Erfinder: HAIMER, Franz, 86568 Hollenbach-Igenhausen (DE); REGAU, Bernhard, 86551 Unterwittelsbach (DE)
(74) Vertreter: Liska, Horst
(86) Internationale Anmeldenummer: PCT/EP2006/002637
(87) Internationale Veröffentlichungsnummer: WO 2006/100061

(56) Entgegenhaltungen:
- EP-A- 0 662 023
- DE-A1- 10 312 743
- DE-A1- 10 317 574
- DE-A1- 10 317 576
- DE-U1- 20 203 783
- JP-A- 2000 317 768
- JP-A- 2001 310 206
- US-A1- 2003 088 972
- US-A1- 2003 178 794

## Beschreibung

Die Erfindung betrifft einen Werkzeughalter, und insbesondere einen Werkzeughalter für ein um eine Drehachse rotierend anzutreibendes Werkzeug, dessen Schaft wenigstens einen längs der Drehachse sich erstreckenden Kanal für ein Kühl- oder/und Schmierfluid enthält oder dessen Kanalquerschnitt zusammen mit dem Werkzeughalter begrenzt.

Es ist bekannt Kühl- oder Schmiermittel, das in Form eines Flüssigkeitsstrahls oder als Nebel den Schneiden eines spanenden Rotationswerkzeugs, beispielsweise eines Bohrers oder eines Fräsers zugeführt werden soll, von der Antriebsspindel der Werkzeugmaschine her in einen zentrischen Kanal des Werkzeughalters einzuleiten und von dort über eine oder mehrere axiale Bohrungen des Werkzeugs den Werkzeugschneiden zuzuführen (DE 103 12 743 A1). Es ist auch bekannt am Innenumfang der den Werkzeugschaft im Presssitz aufnehmenden Aufnahmeöffnung des Werkzeughalters axiale Nuten für die Durchflutung des Kühl- bzw. Schmierfluids vorzusehen (EP 0 662 023 A1).

Um mit möglichst geringen Schmiermittelmengen auszukommen, werden Minimalmengenschmiersysteme (MMS-Systeme) eingesetzt, bei welchen das Schmiermittel als von einem Luftstrom getragener Nebel den Werkzeugschneiden zugeführt wird. Es existieren einkanalige MMS-Systeme, bei welchen der Schmiermittel nebel außerhalb des Werkzeughalters erzeugt wird und zweikanalige Systeme, bei welchen Luft und Schmiermittel gesondert dem Werkzeughalter zugeführt werden und das Schmiermittel erst im Werkzeughalter zerstäubt wird. Einkanalige Systeme setzen hinreichend große Strömungsquerschnitte voraus, um einen hinreichenden Volumenstrom an nebelförmigem Schmierfluid den Werkzeugschneiden zuführen zu können. Bei zweikanaligen Systemen dürfen die Strömungsquerschnitte hingegen nicht zu große sein, da ansonsten nicht hinreichend hohe Strömungsgeschwindigkeiten des Schmierfluids erreicht werden. Es ist wünschenswert, dass der Werkzeughalter bei beiden Systemarten eingesetzt werden kann.

MMS-Systeme reagieren empfindlich auf Luftverwirbelungen im Strömungsweg des Schmierfluids, wie sie an sprunghaften Änderungen des Strömungsquerschnitts, beispielsweise an Kanten oder Ecken oder bei engen Umlenkungen der Strömungsrichtung auftreten können. Es kommt zu Luftverwirbelungen und zum Niederschlagen der als Nebel in dem Luftstrom geführten Schmierflüssigkeit. Die Kanäle des Werkzeughalters können verstopfen und das Schmiermittel kann bei erhöhten Betriebstemperaturen, wie sie insbesondere bei Schrumpffuttern oder dergleichen auftreten können, festbacken. Besonders nachteilig ist aber, dass es zu stoßweiser Schmierung kommen kann und die Kontinuität des MMS-Volumenstroms als Voraussetzung für eine stabile und sichere Zerspanung nicht erreicht wird.

Üblicherweise wird die Gesamtlänge der aus dem Werkzeughalter und dem darin eingespannten Werkzeug bestehenden Einheit mittels eines Längeneinstellgeräts gemessen und justiert. Bei einem hydraulischen Dehnspannfutter oder einem thermischen Schrumpffutter wird mittels eines Anschlags das in die im Durchmesser gedehnte Aufnahmeöffnung des Werkzeughalters eingesetzte Werkzeug in eine vorbestimmte Axialposition relativ zu einer Bezugsfläche des Werkzeughalters gebracht, bevor der Werkzeughalter gespannt wird. Derartige Einstellgeräte sind beispielsweise in DE 103 12 743 A1, DE 103 17 576 A1, DE 103 17 574 A1 oder DE 202 03 783 U1 beschrieben. Die Einstellgeräte setzen zum Teil einen zur Drehachse koaxialen, von der Seite des Kupplungsabschnitts her bis in die Schaftaufnahmeöffnung des Werkzeughalters hineinreichenden Kanal für einen Anschlagdorn voraus, der an seinem freien Ende einen Anschlag für das Stirnende des Werkzeugschafts bildet und die gewünschte Position des Werkzeugs relativ zum Werkzeughalter festlegt. Herkömmliche Werkzeughalter für MMS-Systeme, wie sie beispielsweise aus DE 103 12 743 A1 bekannt sind, benutzen Hülsenschrauben, um den zentralen Schmierfluidkanal des Werkzeughalters mit den in dem Werkzeug vorgesehenen Kanälen zu verbinden. Allerdings kann es bei der Handhabung der Hülsenschraube des bekannten Werkzeughalters zu Problemen kommen, insbesondere wenn eine Automatisierung des Werkzeugwechsels angestrebt wird.

Aus JP-A-2000-317768 ist ein Werkzeughalter gemäß dem Oberbegriff des Anspruchs 1 bekannt, dessen Halterkörper in einer zur Drehachse zentrischen Durchgangsöffnung an seinem einen Ende eine Spannzange für ein um eine Drehachse rotierend anzutreibendes Werkzeug enthält. Das Werkzeug hat einen längs seiner Drehachse sich erstreckenden Kanal für ein Kühl-oder/und Schmierfluid. Der Spannzange axial gegenüberliegend, bildet der Halterkörper einen Kupplungsabschnitt für die drehfeste, aber lösbare Verbindung mit einer rotierend angetriebenen Antriebsspindel und trägt ferner eine zur Drehachse zentrische Fluidkupplung für die Zufuhr des Kühl-oder/und Schmierfuids. Axial zwischen der Spannzange und der Fluidkupplung ist die Durchgangsöffnung des Halterkörpers mit einem Innengewinde versehen, in das eine Anschlaghülse als Sitz für den in die Spannzange einsteckbaren Schaft des Werkzeugs eingeschraubt ist. In die Anschlaghülse greift axial ein Rohrabschnitt ein, den eine zwischen der Anschlaghülse und einem Ringbund des Rohrabschnitts eingespannte Schraubendruckfeder gegen eine als Träger der Fluidkupplung dienende Ringschulter des Halterkörpers spannt.

Zum besseren Verständnis soll zunächst ein Beispiel eines Werkzeughalters für ein um eine Drehachse rotierend anzutreibendes Werkzeug erläutert werden, der in Zusammenhang mit einem Mindermengen-Schmiersystem betrieben werden kann und hierbei einerseits für eine hinreichend kontinuierliche Schmierung sorgt und andererseits einfach zu handhaben ist, sowie insbesondere auch eine einfache Längen-Voreinstellung ermöglicht.

Der Werkzeughalter ist für ein um eine Drehachse rotierend antreibbares Werkzeug bestimmt, dessen Schaft wenigstens einen längs der Drehachse sich erstreckenden Kanal für ein Kühl- oder/und Schmierfluid enthält oder dessen Kanalquerschnitt zusammen mit dem Werkzeughalter begrenzt.

Der Werkzeughalter umfasst:
- einen Halterkörper, der einen Werkzeugaufnahmeabschnitt mit einer zur Drehachse zentrischen Aufnahmeöffnung für die drehfeste, aber axial lösbare Aufnahme des Werkzeugschafts, einen Kupplungsabschnitt für die drehfeste, aber lösbare Verbindung mit einer rotierend angetriebenen Antriebsspindel und eine zur Aufnahmeöffnung gleichachsige und in diese übergehende, zur Seite des Kupplungsabschnitts offene Durchgangsöffnung aufweist,
- eine in der Durchgangsöffnung axial bewegbar angeordnete Anschlaghülse, die auf der Seite der Aufnahmeöffnung eine Anschlagfläche für das Stirnende des Werkzeugschafts bildet und
- eine zur Drehachse zentrische Fluidkupplung auf der Seite des Kupplungsabschnitts für die Zufuhr des Kühl- oder/und Schmierfluids.

Die Anschlaghülse hat ein Außengewinde und sitzt axial schraubbar in einem Innengewinde der Durchgangsöffnung. In der Durchgangsöffnung ist ein von der Seite des Kupplungsabschnitts her in der Fluidkupplung axial zugängliches, zur Drehachse koaxiales, im Wesentlichen geschlossenwandiges Stellrohr relativ zu dem Halterkörper drehbar aber axial fixiert angeordnet. Die Anschlaghülse ist drehfest aber axial beweglich mit dem Stellrohr gekuppelt und überlappt teleskopierbar axial mit dem der Aufnahmeöffnung zugewandten Ende des Stellrohrs.

Die Anschlaghülse und das Stellrohr sind relativ zueinander teleskopierbar. Da das Stellrohr relativ zum Werkzeughalter axial fixiert ist, haben für den Eingriff eines Stellwerkzeugs bestimmte Eingriffsflächen des Stellrohrs unabhängig von der Axialposition der Anschlaghülse eine stets gleichbleibende axiale Position relativ zum Werkzeughalter. Dies erleichtert die Handhabung und ermöglicht insbesondere die Automatisierung, da das Stellwerkzeug des Werkzeugwechselautomaten die Eingriffsfläche des Stellrohrs in gleichbleibender Position relativ zum Kupplungsabschnitt vorfindet.

Einstellgeräte, die die Werkzeugposition relativ zu dem Werkzeughalter mittels eines von der Seite des Kupplungsabschnitts her eingeführten Anschlagdorns festlegen, können den beweglichen Anschlagdorn zugleich für den Drehantrieb des Stellrohrs nutzen.

Der Anschlag der Anschlaghülse kann einen Dichtsitz für eine fluiddichte Verbindung zwischen der Anschlaghülse und den Kühl- bzw. Schmiermittelkanälen bilden, speziell dann, wenn die Kanäle in dem Werkzeugschaft enthalten sind.

Je nach Art der in dem Werkzeugschaft oder der Aufnahmeöffnung des Werkzeugaufnahmeabschnitts des Werkzeughalters gebildeten Kanälen, kann die Anschlagfläche der Anschlaghülse aber auch nur als Positionieranschlag für die Längen-Voreinstellung der Werkzeug-Werkzeughalter-Einheit ausgenutzt werden, insbesondere wenn in der Aufnahmeöffnung des Werkzeugaufnahmeabschnitts zur Bildung der Kühl- bzw. Schmiermittelkanäle Nuten am Innenumfang vorgesehen sind.

Das Stellrohr greift bevorzugt in die Anschlaghülse hinein. Hierdurch werden entgegen der Strömungsrichtung offene Ringspalte vermieden, was die Gefahr der Ablagerung von Schmiermittel vermindert.

Die Fluidkupplung kann eine gleichachsig zur Durchgangsöffnung zur Seite des Kupplungsabschnitts hin von dem Halterkörper abstehende Kupplungshülse umfassen, an der das Stellrohr axial fixiert ist. Da das freie Ende der Kupplungshülse im Allgemeinen geringfügig radial elastisch auslenkbar ist, axial jedoch fixiert ist, lässt sich auf diese Weise die radiale Ausgleichsbewegung ohne weiteres auch auf das Stellrohr übertragen. Bevorzugt weist das Stellrohr hierbei im Bereich seines der Anschlaghülse fernen Endes einen Ringkragen auf, der in der Kupplungshülse drehbar axial fixiert ist. Auf diese Weise wird der aus Toleranzgründen zwischen dem Stellrohr und der Kupplungshülse notwendige Ringspalt bereits stromaufwärts weitgehend verschlossen, so dass die Bildung von Taschen vermieden wird.

Im Betrieb wird die Kupplungshülse mit einer Zuführleitung der Arbeitsspindel gekuppelt. Das in der Kupplungshülse angeordnete Stellrohr endet im Bereich des freien Endes der Kupplungshülse. Um für einen möglichst verwirbelungsfreien Übergang von der Zuleitung der Arbeitsspindel in das Stellrohr zu sorgen, endet das Stellrohr zweckmäßigerweise in axialem Abstand von dem freien Ende der Kupplungshülse, bildet also einen geringfügig gestuften Übergang oder aber der Innenumfang des Stellrohrs erweitert sich zum freien Ende der Kupplungshülse hin angenähert stumpfkegelig.

Bei der Werkzeugangriffsfläche des Stellrohrs handelt es sich bevorzugt um eine Einstecköffnung mit einer inneren Polygon-Querschnittfläche, beispielsweise einer Sechseck-Fläche. Auch für die drehfeste, aber axial bewegliche Kupplung der Anschlaghülse zum Stellrohr können die Anschlaghülse an ihrer Innenfläche und das Stellrohr auf seiner Außenfläche einander zugeordnete Formschlussflächen, insbesondere Polygon-Querschnittsflächen haben. Besonders einfach lässt sich eine solche Gestaltung realisieren, wenn das Stellrohr im Wesentlichen auf seiner ganzen Länge eine Rohrwand mit Polygon-Querschnitt, insbesondere Sechseck-Querschnitt hat.

Zur Verringerung der Verwirbelungsneigung der Fluidströmung am Übergang von der Anschlaghülse zum Werkzeugschaft bildet die Anschlaghülse zweckmäßigerweise auf der Seite der Aufnahmeöffnung einen zur Aufnahmeöffnung hin sich erweiternden Konus.

Um die Handhabung zu erleichtern, insbesondere aber um mit möglichst geringem Drehmoment eine dichte Verbindung zwischen dem Stirnende des Werkzeugschafts und der Anschlaghülse zu ermöglichen, ist in einer bevorzugten Ausgestaltung vorgesehen, dass die Anschlaghülse in axialer Richtung geteilt ist, wobei ein erster Hülsenteil das Außengewinde aufweist und mit dem Stellrohr drehfest aber axial beweglich verbunden ist und ein zweiter Hülsenteil die Anschlagfläche bildet und gleichachsig drehbar an dem ersten Hülsenteil axial abgestützt ist. Auf diese Weise lässt sich das beim Anlegen der Anschlaghülse an das Stirnende des Werkzeugschafts aufzubringende Drehmoment beträchtlich verringern, insbesondere wenn der zweite Hülsenteil über Wälzkörper, wie zum Beispiel Kugeln oder Gleitlagerelemente nach Art eines Drehlagers an dem ersten Hülsenteil gelagert ist. Zweckmäßigerweise ist der zweite Hülsenteil drehfest aber axial beweglich an dem Halterkörper geführt.

Wie bereits erläutert, soll der Werkzeughalter mittels eines Längeneinstellgeräts auf eine vorbestimmte Länge eingestellt werden können. Die Fluidkupplung, das Stellrohr und die Anschlaghülse bilden deshalb zweckmäßigerweise einen von der Seite des Kupplungsabschnitts bis zur Aufnahmeöffnung durchgehenden, zur Drehachse koaxialen Aufnahmekanal für einen axial beweglich einstellbaren Anschlagdorn des Werkzeug-Längeneinstellgeräts. Zweckmäßigerweise bildet der axial einstellbare Anschlagdorn des Einstellgeräts zugleich auch das mit dem Stellrohr drehfest kuppelbare Stellwerkzeug, hat also längs der Werkzeugangriffsflächen des Stellrohrs verschiebbare, komplementäre Angriffsflächen, die es erlauben das Stellrohr in einer wählbaren axialen Position des Anschlagdorns zu drehen.

Der vorangegangen erläuterte Werkzeughalter ist in erster Linie für Werkzeuglängen-Einstellgeräte bestimmt, die die Einstecktiefe des Werkzeugschafts mittels eines von der Seite des Kupplungsabschnitts des Werkzeughalters her eingesteckten Anschlagdorns festlegen. Einstellgeräte dieser Art sind beispielsweise in DE 103 17 576 A1 oder DE 103 17 574 A1 beschrieben. Es ist jedoch auch denkbar die Länge der Werkzeug-Werkzeughalter-Einheit dadurch auf einen vorbestimmten Wert einzustellen, dass das bereits verschiebbar in der Aufnahmeöffnung des Werkzeughalters geführte Werkzeug mit seiner freien Werkzeugspitze gegen einen vor dem Werkzeughalter angeordneten, auf das gewünschte Längenmaß eingestellten Anschlag des Einstellgeräts gegebenenfalls manuell geschoben wird. Bei thermisch aufweitbaren Schrumpffuttern müssen hierzu allerdings Sicherheitsvorkehrungen getroffen werden, wenn Verletzungen vermieden werden sollen.

Es ist Aufgabe der Erfindung einen konstruktiv einfachen Werkzeughalter zu schaffen, der eine Mindermengenschmierung des Werkzeugs erlaubt, der jedoch einfacher als bisher handhabbar ist, insbesondere in Verbindung mit einem Werkzeuglängen-Einstellgerät.

Diese Aufgabe wird erfindungsgemäß durch die in Anspruch 1 angegebenen Merkmale gelöst.

Die Feder spannt die relativ zu dem Rohrabschnitt teleskopierbare Anschlaghülse selbsttägig gegen das Stirnende des Werkzeugschafts, sorgt also selbsttätig für einen Dichtungssitz gegenüber den gegebenenfalls in dem Werkzeugschaft verlaufenden Schmiermittelkanälen. Andererseits versucht die Feder bei noch nicht spannendem Werkzeughalter den Werkzeugschaft aus dem Halter herauszuschieben. Diese Ausschubbewegung kann für den Anlagekontakt der Werkzeugspitze an einem in dem Ausschubweg ragenden Anschlag eines Werkzeuglängen-Einstellgeräts ausgenutzt werden, ohne dass manuell dieser Ausschubbewegung nachgeholfen werden müsste. Es versteht sich, dass der Anschlag des Einstellgeräts manuell in die gewünschte Position gebracht werden kann oder aber mittels eines Positionierantriebs gegen die Kraft der Feder in die gewünschte Position gestellt werden kann. Aber auch bei dieser Gestaltung des Werkzeughalters können Werkzeuglängen-Einstellgeräte mit einem durch die Anschlaghülse hindurchgreifenden Anschlagdorn eingesetzt werden, wenn der Anschlaghülse wenigstens ein Rastorgan zugeordnet ist, das die Anschlaghülse in einer im Wesentlichen zurückgezogenen Position gegen die Kraft der Feder, ansonsten aber lösbar fixieren kann. Der Werkzeugschaft kann dann mit Hilfe des Anschlagdorns des Einstellgeräts positioniert gespannt werden. Für die dichte Verbindung genügt es dann lediglich die Verrastung zu lösen.

Die an der Anschlaghülse abgestütze Feder kann als Schraubenfeder ausgebildet sein und sich mit ihrem anderen Ende unmittelbar an dem Halterkörper abstützen. Der Rohrabschnitt kann hierbei einstückig an dem Halterkörper angeformt sein oder aber fest mit einem Bauteil der Fluidkupplung verbunden sein. Um die Bauteile auswechseln zu können und gegebenenfalls für unterschiedliche Typen von Werkzeughaltern standardisieren zu können, bildet der Rohrabschnitt, die Anschlaghülse und die Feder eine gesonderte, auswechselbare Baueinheit. Hierzu weist der Rohrabschnitt an seinem der Fluidkupplung benachbarten Ende einen Ringflansch und die Anschlaghülse an ihrem Außenmantel eine Ringschulter auf, wobei die Feder zwischen dem Ringflansch und der Ringschulter eingespannt ist. Eine solche Baueinheit kann unmittelbar in der Durchgangsöffnung des Halterkörpers angeordnet werden.

Der Einbau der Baueinheit erfolgt zweckmäßigerweise von der Seite der Fluidkupplung her, die eine gleichachsig zur Durchgangsöffnung zur Seite des Kupplungsabschnitts hin von dem Haltekörper abstehende, an dem Haltekörper abnehmbar befestigte Kupplungshülse umfasst, an deren der Durchgangsöffnung axial zugewandten Ende der Ringflansch abgestützt ist. Der Rohrabschnitt kann hierbei mit einer ringförmigen Stirnfläche lose an einer relativ zum Haltekörper festen Ringfläche axial abgestützt sein. In einer einfachen Ausgestaltung sind die ringförmige Stirnfläche des Rohrabschnitts und die relativ zum Halterkörper feste Ringfläche als ebene, achsnormale Flächen ausgebildet. Soweit die Kupplungshülse der Fluidkupplung jedoch, wie bereits vorangegangen erläutert, geringfügig radial elastisch auslenkbar ist, sind die ringförmige Stirnfläche des Rohrabschnitts und die relativ zum Haltekörper feste Ringfläche bevorzugt als einander zugeordnete, zentrumsgleiche kugelabschnittförmige Gelenkflächen ausgebildet, um auch bei ausgelenkter Kupplungshülse Taschenbildung zu vermeiden.

Die Anschlaghülse wird von der Feder zur Aufnahmeöffnung hin vorgespannt. Um auf konstruktiv einfache Weise zu verhindern, dass die Aufnahmehülse durch die Aufnahmeöffnung hindurch aus dem Werkzeughalter herausgeschoben wird, kann vorgesehen sein, dass die Durchgangsöffnung als Stufenöffnung ausgebildet ist, deren Innendurchmesser zur Aufnahmeöffnung hin in wenigstens einer Stufe abnimmt und am Übergang zur Aufnahmeöffnung eine Ringschulter für die Bewegungsbegrenzung der Anschlaghülse bildet, wobei der Halterkörper auf der im Durchmesser kleineren Seite der Durchgangsöffnung abnehmbare Anschlagmittel für den Rohrabschnitt aufweist, wie dies vorangegangen erläutert wurde. Der Einbau der Anschlaghülse und der Feder erfolgt in diesem Fall von der Seite des Kupplungsabschnitts her. Alternativ kann die Durchgangsöffnung aber auch als Stufenöffnung ausgebildet sein, deren Innendurchmesser zur Aufnahmeöffnung hin in wenigstens einer Stufe zunimmt, wobei der Halterkörper auf der im Durchmesser größeren Seite Anschlagmittel für die Anschlaghülse aufweist. In dieser Variante erfolgt der Einbau der Anschlaghülse durch die Aufnahmeöffnung hindurch. Bei den Anschlagmitteln für die Anschlaghülse kann es sich um nachträglich eingesetzte Sicherungsringe oder Sicherungsstifte in einer außerhalb des Einsteckbereichs des Werkzeugschafts gelegenen Position des Halterkörpers handeln. Alternativ kann die Anschlaghülse jedoch ein gewisses Übermaß bezogen auf den Durchmesser der Aufnahmeöffnung haben, so dass die Anschlaghülse lediglich in der Durchmesser größeren Durchgangsöffnung verschiebbar ist, der Durchtritt durch die Aufnahmeöffnung jedoch verhindert ist. Das Übermaß der Anschlaghülse kann nach dem Einbau der Anschlaghülse durch plastische Verformung erzeugt werden; die Anschlaghülse kann aber auch unter Überwindung des Presssitzes gegebenenfalls durch die Aufnahmeöffnung hindurch geschoben werden, wobei die Aufnahmeöffnung gegebenenfalls hierzu auch thermisch erweitert werden kann. Geeignet sind auch radial elastische Rastorgane, die von der Kraft der Feder allein nicht überwunden werden können.

Üblicherweise muss bei den vorangegangen erläuterten Werkzeughaltern die Anschlaghülse dem Schaftdurchmesser des zu spannenden Werkzeugs angepasst sein. Dementsprechend muss auch die Durchgangsöffnung des Halterkörpers in dem Bewegungsbereich der Anschlaghülse dem Werkzeugschaftdurchmesser entsprechend gewählt werden. Von Vorteil ist jedoch eine Standardisierung der übrigen, an dem Mindermengenschmiersystem beteiligten Komponenten.

Bei einem der Erfindung entsprechenden Werkzeughaltersatz, bei dem die Aufnahmeöffnungen der Werkzeughalter wiederum unterschiedlich große Durchmesser haben, haben die Durchgangsöffnungen im Bereich der Rohrabschnitte sowie die Rohrabschnitte einheitlichen Durchmesser. Von Vorteil ist in diesem Zusammenhang auch eine zweiteilige Ausgestaltung der Anschlaghülse, bei der die der Feder zugeordnete Abstützfläche an einem ersten Hülsenteil und die gegen den Werkzeugschaft zu spannende Anschlagfläche an einem gesonderten, jedoch betriebsmäßig mit dem ersten Hülsenteil verbundenen zweiten Hülsenteil vorgesehen ist. Der erste Hülsenteil kann für den Satz von Werkzeughaltern einheitlich gestaltet werden, während der zweite Hülsenteil dem wechselnden Schaftdurchmesser angepasst werden kann.

Die Werkzeughalter gemäß der Erfindung vereinfachen die Voreinstellung der Gesamtlänge der Werkzeug-Werkzeughalter-Einheiten, indem die Feder des Werkzeughalters für eine Ausschubbewegung des Werkzeugschafts bei noch nicht gespanntem Werkzeughalter sorgt und diese Ausschubbewegung für eine selbsttätige Anlage der Werkzeugspitze gegen einen Anschlag des Einstellgeräts ausgenutzt werden kann.

Im Folgenden wird die Erfindung anhand von Zeichnungen näher erläutert. Hierbei zeigt:
Fig. 1 einen Axiallängsschnitt durch einen Werkzeughalter vom Schrumpffuttertyp mit einer Schmiermitteldurchleitung;
Fig. 2 einen Axiallängsschnitt durch einen Werkzeughalter gemäß der Erfindung;
Fig. 3 einen Axiallängsschnitt durch eine erste Variante des Werkzeughalters gemäß der Erfindung;
Fig. 4 einen Axiallängsschnitt durch eine Variante des Werkzeughalters gemäß Fig. 1;
Fig. 5 einen Axiallängsschnitt durch eine zweite Variante des Werkzeughalters gemäß der Erfindung; und
Fig.6 einen Axiallängsschnitt durch eine dritte Variante des Werkzeughalters gemäß der Erfindung.

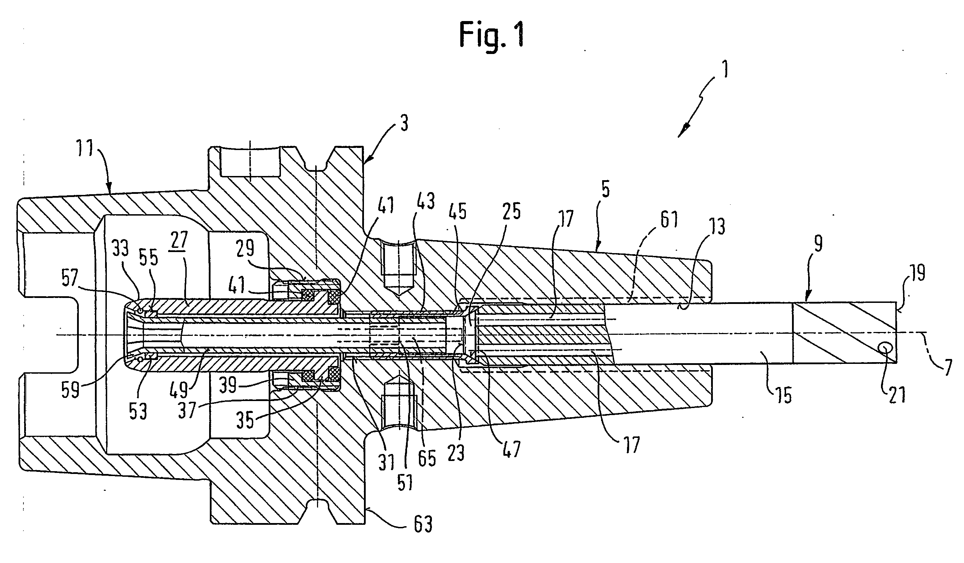

Zunächst soll anhand von Fig. 1 der Aufbau und die Eigenschaften eines für ein Minimalmengenschmiersystem geeigneten Werkzeughalters erläutert werden.

Fig. 1 zeigt einen Werkzeughalter 1 vom Schrumpffuttertyp, dessen in der Regel einteiliger Halterkörper 3 einen hülsenförmigen Werkzeugaufnahmeabschnitt 5 für ein um eine Drehachse 7 rotierend anzutreibendes Werkzeug 9, beispielsweise einen Fräser oder Bohrer an axial einem Ende des Halterkörpers 3 und einem Kupplungsabschnitt 11, hier in Form einer Hohlschaftkupplung am axial gegenüberliegenden Ende für die drehfeste Kupplung mit einer rotierenden, nicht näher dargestellten Antriebspindel einer Werkzeugmaschine aufweist. Der Aufnahmeabschnitt 5 hat eine zur Drehachse 7 zentrische Aufnahmeöffnung 13, die thermisch, insbesondere durch induktive Erwärmung mittels einer Induktionsspule aufgeweitet werden kann, so dass das Werkzeug 9 mit seinem Schaft 15 lose in die Aufnahmeöffnung 13 eingesteckt oder aus dieser entnommen werden kann. Nach dem Abkühlen des Aufnahmeabschnitts 5 wird der Schaft 15 im Presssitz gehalten.

In dem Werkzeug 9 verlaufen parallel zur Drehachse 7 mehrere, hier zwei axiale Kanäle 17, die dem freien Ende 19 des Werkzeugs 9 benachbart bei 21 jeweils münden und am axial gegenüberliegenden Stirnende 23 des Schafts 15 über eine diametrale Quernut 25 zugänglich sind. Die Kanäle 17 leiten Schmiermittelfluid, welches dem Werkzeughalter 1 im Betrieb von der Seite der Arbeitsspindel her an einer Kupplungshülse 27 zugeführt wird, in den Bereich der Schneiden des Werkzeugs 9. Die Kupplungshülse 27 ist mit ihrem einen Ende in einer Erweiterung 29 einer bis in die Aufnahmeöffnung 13 reichenden, zur Drehachse 7 zentrischen Durchgangsöffnung 31 befestigt und an ihrem zum Kupplungsabschnitt 11 hin frei abstehenden Ende 33 mit einem das Schmierfluid zuführenden Gegenstück der Arbeitsspindel dicht kuppelbar. Für die Befestigung in der Erweiterung 29 trägt die Kupplungshülse 27 einen Ringbund 35 der mittels einer in ein Innengewinde 37 der Erweiterung 29 geschraubten Hülsenschraube 39 zwischen zwei elastischen Dichtringen 41 axial fixiert ist. Das freie Ende 33 der Kupplungshülse 27 ist damit zum Ausgleich von Fluchtungstoleranzen in geringem Umfang radial beweglich.

Die Durchgangsöffnung 31 hat der Aufnahmeöffnung 13 axial benachbart ein Innengewinde 43, in das eine mit einem Außengewinde versehene Anschlaghülse 45 geschraubt ist. Das dem am Umfang kegelstumpfförmigen Ende 23 des Schafts 15 zugewandte Ende der Anschlaghülse 45 bildet eine hohlkonische Anschlagfläche 47 die bei Anlage an dem Ende 23 die Quernut 25 abschließt.

Die Anschlaghülse 45 ist teleskopierbar, jedoch drehfest mit einem Stellrohr 49 gekuppelt, welches seinerseits in der Kupplungshülse 27 drehbar aber axial fixiert gehalten ist. Das Stellrohr 49 hat im Wesentlichen über seine gesamte axiale Länge sowohl an seinem Innenmantel als auch seinem Außenmantel einen gleichförmig polygon-förmigen Querschnitt und ragt axial verschiebbar in die Anschlaghülse 45 hinein. Am Innenmantel der Anschlaghülse 45 ist, wie bei 51 angedeutet eine komplementäre polygonförmige Umfangsfläche angeformt, die mit der polygon-förmigen Außenfläche des Stellrohrs 49 formschlüssig gekuppelt ist.

Dem freien Ende 33 der Kupplungshülse 27 benachbart trägt das Stellrohr 49 einen Ringkragen 53 mit kreisförmigem Außenumfang, der in einer Aussparung 55 der Kupplungshülse 27 mittels eines Sicherungsrings drehbar aber axial fixiert gehalten ist. Der dem Ende 33 benachbarte Endbereich 59 des Stellrohrs 49 ist zum freien Ende hin konisch erweitert.

Der Innenmantel des Stellrohrs 49 hat gleichfalls Polygon-Querschnitt, hier Sechseckquerschnitt und bildet damit Werkzeugeingriffsflächen für ein Stellwerkzeug, mittels dem die Anschlagschraube 45 mit ihrem Innenkonus 47 abdichtend gegen das Ende 23 des Schafts 15 geschraubt werden kann.

Der Werkzeughalter 1 erlaubt die Schmierung des Werkzeugs 9 mit einem Schmiermittelnebel in einem Mindermengenschmiersystem (MMS-System). Der Schmiermittelnebel wird an dem Ende 59 des Stellrohrs 49 eingeblasen und strömt im Wesentlichen umlenkungsfrei und verwirbelungsfrei über die Kanäle 17 zu den Auslassöffnungen 21 des Werkzeugs 9. Da der Schmierstoffnebel bei Verwirbelung an Kanten und abrupten Durchmesseränderungen zum Abscheiden des Schmierstoffs neigt, ist in Form möglichst gleichbleibend axial verlaufender Kanäle und gegebenenfalls konischer Übergänge, wie bei 59 dargestellt, dafür gesorgt, dass die Schneiden des Werkzeugs 9 kontinuierlich und gleichförmig geschmiert werden. Da darüber hinaus das Stellrohr 49 in die Anschlaghülse 45 eingreift ist der aufgrund von Toleranzen zwischen dem Stellrohr 49 und dem Innenmantel der Anschlaghülse 45 verbliebene Ringspalt lediglich in Strömungsrichtung offen, so dass eventuell abgeschiedenes Schmiermittel, wie zum Beispiel Öl oder dergleichen sich nicht in dem Ringspalt absetzen kann.

Bei dem dargestellten Ausführungsbeispiel sind zwei Schmiermittelkanäle 17 in dem Werkzeug 9 direkt vorgesehen. Es versteht sich, dass gegebenenfalls auch ein einziger, dann vorzugsweise zentrischer Kanal vorgesehen sein kann. Alternativ können auch am Umfang der Aufnahmeöffnung 13 des Aufnahmeabschnitts 5 mehrere axial verlaufende Nuten 61 vorgesehen sein, die zusammen mit dem Außenmantel des Schafts 15 Schmiermittelkanäle bilden, die den Schmiermittelnebel nach außen leiten. Es versteht sich, dass in diesem Fall die Anschlaghülse 45 im Bereich ihres werkzeugseitigen Endes radiale Öffnungen haben muss.

Der Werkzeughalter 1 kann in einem Werkzeuglängen-Voreinstellgerät auf eine bestimmte Länge der Werkzeug-Werkzeughalter-Einheit zwischen dem Ende 19 des Werkzeugs 9 und einer Bezugsfläche 63 des Werkzeughalters eingestellt werden. Für Voreinstellgeräte, die mittels eines Anschlagdorns die Eintauchtiefe des Schafts 15 in die Aufnahmeöffnung 13 vorgeben, bilden das Stellrohr 49 und die Anschlaghülse 45 einen Durchgangskanal für den bei 65 angedeuteten, an dem Ende 23 des Schafts 15 anliegenden und hierbei die vorbestimmte Einstecktiefe festlegenden Anschlagdorn. Es versteht sich, dass die mittels des Stellrohrs 49 axial verstellbare Anschlaghülse 45 die Funktion des Anschlagdorns 65 übernehmen kann. Von Vorteil ist hierbei, dass das Stellrohr 49 relativ zu dem Halterkörper 3 fixiert ist und damit die Werkzeugeingriffsflächen eine gleichbleibende axiale Position einnehmen. Dies erleichtert die Handhabung und gegebenenfalls die Automatisierung des Voreinstellvorgangs.

Werkzeughalter für unterschiedliche Werkzeugschaftdurchmesser unterscheiden sich in der Regel lediglich durch die Abmessungen ihres Aufnahmeabschnitts. Um eine Standardisierung zu erreichen, ist es deshalb zweckmäßig, für einen Satz von Werkzeughaltern ähnlichen Typs, jedoch unterschiedlichen Werkzeugschaftdurchmessers, die Kupplungshülse 27 und das Stellrohr 49 im Durchmesser einheitlich zu gestalten und lediglich die Anschlaghülse 45 dem sich ändernden Schaftdurchmesser anzupassen.

Im Folgenden werden Werkzeughalter gemäß der Erfindung beschrieben. Mit Komponenten des vorstehend erläuterten Werkzeughalters gleichwirkende Komponenten sind mit den

Bezugszahlen vorangegangen erläuterter Komponenten bezeichnet und zur Unterscheidung mit einem Buchstaben versehen. Zur Erläuterung des Aufbaus und der Wirkungsweise wird auf die gesamte Beschreibung Bezug genommen. Es versteht sich, dass an den erläuterten Werkzeughaltern beschriebene Komponenten und Varianten auch bei den übrigen erläuterten Werkzeughaltern einsetzbar sind.

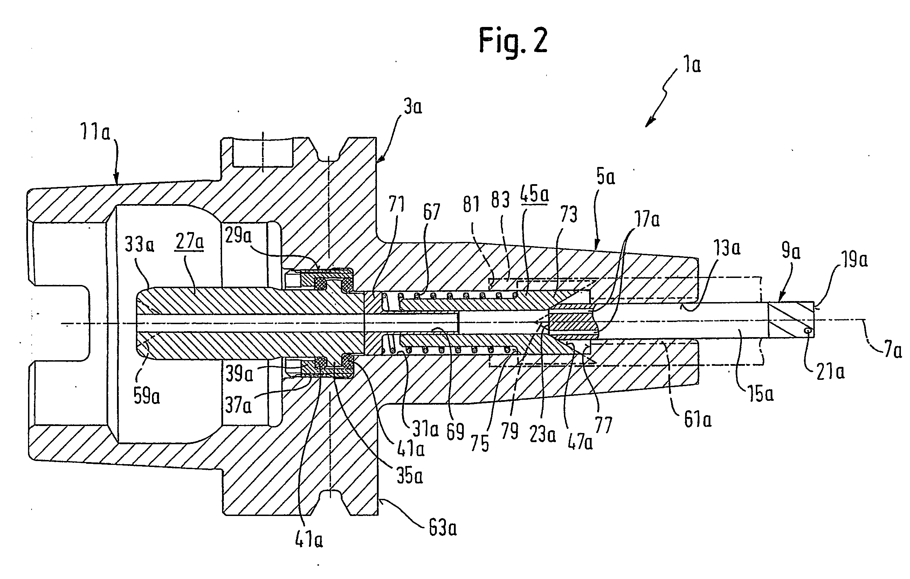

Bei dem Werkzeughalter 1 der Fig. 1 wird die Anschlaghülse 45 durch manuellen oder motorischen Drehantrieb des Stellrohrs 49 in gegebenenfalls abdichtenden Anlagekontakt mit dem Stirnende 23 des Werkzeugs 9 gebracht. Fig. 2 zeigt einen Werkzeughalter 1a gemäß der Erfindung, bei welchem die zum Werkzeug 9a konisch sich erweiternde Anlagefläche 47a der Anschlaghülse 45a selbsttägig mittels einer Schraubendruckfeder 67 gegen das Stirnende 23a des Werkzeugschafts 15a gedrückt wird. Die Anschlaghülse 45a sitzt axial verschiebbar in der bis an die Aufnahmeöffnung 13a des Aufnahmeabschnitts 5a reichenden Durchgangsöffnung 31 a und umschließt einen Rohransatz 69, der von der Seite des Kupplungsabschnitts 11a her in die Anschlaghülse 45a teleskopierbar hineinragt. Der Rohransatz 69 trägt einen in der Durchgangsöffnung 31a radial geführten Ringflansch 71, an dem sich die Schraubendruckfeder 67 mit ihrem einen Ende axial abstützt. Die Schraubendruckfeder 67 umschließt die Anschlaghülse 45a und stützt sich mit ihrem anderen Ende an einer von einem in der Durchgangsöffnung 31 a radial geführten, die Anschlagfläche 47a formenden Kopf 73 gebildeten Ringschulter 75 ab.

Der Rohransatz 69 mit seinem Ringflansch 71, die Schraubendruckfeder 67 und die Anschlaghülse 45a bilden eine Baueinheit, die als solche auswechselbar in der Durchgangsöffnung 31 a eingebaut ist. Die Durchgangsöffnung 31 a ist hierzu als Sacköffnung ausgebildet, die sich auf der Seite des Aufnahmeabschnitts 5a an einer den Ausschubweg der Anschlaghülse 45a begrenzenden Ringschulter 77 verengt. Auf der Seite des Kupplungsabschnitts 11a stützt sich der Ringflansch 71 an der gleichfalls in die Durchgangsöffnung 31a hineinragenden Kupplungshülse 27a ab. Die Kupplungshülse 27a ist, wie dies anhand der Fig. 1 bereits erläutert wurde, abnehmbar an dem Halterkörper 3a befestigt und kann sich mit ihrem freien Ende 33a geringfügig radial bewegen, nachdem der Ringflansch 71 lose an der Kupplungshülse 27a abgestützt ist.

Auch der Werkzeughalter 1a ist für ein Mindermengenschmiersystem geeignet. Der Schmiernebel wird der Kupplungshülse 27a an deren freien Ende 33a zugeführt oder gegebenenfalls in der Kupplungshülse 27a erzeugt, wobei die Kupplungshülse zur Vermeidung unerwünschter Verwirbelung mit einem trichterförmigen Einführkonus 59a versehen sein kann. Da der Rohransatz 69 in Fluidströmungsrichtung in den Hülsenansatz 45a hineinragt, bildet er keine in der Strömungsrichtung beschickbare Tasche, in welcher sich Schmiermittel ablagern kann. Der Innendurchmesser der Anschlaghülse 45a ist größer als der Außenabstand der beiden Kanäle 17a des Werkzeugs 9a, so dass auf eine Quernut, wie sie in Fig. 1 bei 25 dargestellt ist, verzichtet werden kann. Alternativ kann das Stirnende 23a des Schafts 15a aber radial innerhalb des Anordnungskreises der Kanäle 17a mit einem zentrischen Strömungsleitkegel 79 versehen sein. Es versteht sich, dass auch der Werkzeughalter 1a am Innenmantel seiner Aufnahmeöffnung 13a mit den bereits anhand von Fig. 1 erläuterten Schmiermittelnuten 61a versehen sein kann, um auch Werkzeuge ohne eigene Schmiermittelkanäle einsetzen zu können.

Die von der Schraubendruckfeder 67 gegen den Schaft 15a gedrückte Anschlaghülse 45a erfüllt einen doppelten Zweck. Sie dient, soweit erforderlich, der Abdichtung des durch die Kupplungshülse 27a, den Rohransatz 69 und die Anschlaghülse 45a zu den Kanälen 17a des Werkzeugs 9a führenden Schmiermittelwegs relativ zum Stirnende 23a des Schafts 15a und erleichtert in Zusammenhang mit einem Werkzeuglängen-Einstellgerät die Längeneinstellung der Werkzeug-Werkzeughalter-Einheit. Das Einstellgerät hat einen Messanschlag, der auf einen gewünschten Längenabstand zwischen sich und der Bezugsfläche 63a des Werkzeughalters 1a einstellbar ist. Bei thermisch aufgeweitetem Aufnahmeabschnitt 5a schiebt die Druckfeder 67 das Ende 19a des Werkzeugs 9a gegen diesen voreingestellten Anschlag, ohne dass manuell nachgeholfen werden müsste. Der Messanschlag kann hierbei manuell oder mittels eines Positionierantriebs unter Überwindung der Kraft der Schraubendruckfeder 67 in die gewünschte Abstandposition bewegt werden.

Auch bei dem Werkzeughalter 1a der Fig. 2 ist es zweckmäßig, die Schmiermittelzuführkomponenten zu standardisieren und hierzu zumindest den Rohrabschnitt 69 mit seinem Ringflansch 71 sowie gegebenenfalls die Kupplungshülse 27a mit einheitlichem Durchmesser zu gestalten und ansonsten lediglich den Kopf 73 der Anschlaghülse 45a einem sich ändernden Durchmesser des Werkzeugschafts 15a anzupassen. Da in diesem Fall der Durchmesser des Werkzeugschafts 15a unter Umständen auch größer sein kann als der Durchmesser des Ringflansches 71 a, kann die Durchgangsöffnung 31a auch als zum Aufnahmeabschnitt 5a hin an einer Ringschulter 81 sich erweiternde Stufenöffnung ausgebildet sein. Der Kopf 73 kann hierbei in einer Erweiterung 83 verschiebbar geführt sein, deren Durchmesser geringfügig größer ist als der Durchmesser der Aufnahmeöffnung 13a im Bereich ihrer den Schaft 15a haltenden Spannflächen. Der Kopf 73 wird in diesem Fall trotz geringen Übermaßes unter eventueller thermischer Aufweitung des Aufnahmeabschnitts 5a in die Erweiterung 83 axial eingedrückt. Es versteht sich, dass auch andere Ausschubhemmungen vorgesehen sein können, beispielsweise axial in den Ausschubweg der Anschlaghülse eingreifende Anschläge in Form nachträglich angebrachter Riegel oder plastisch verformter Materialbereiche.

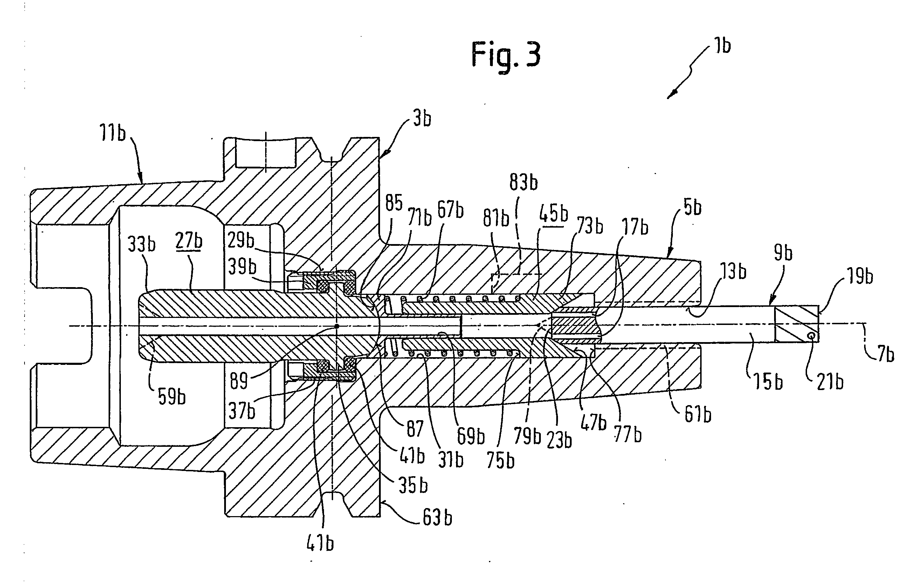

Bei dem Werkzeughalter 1a der Fig. 2 liegen der Ringflansch 71 und die Kupplungshülse 27a an achsnormalen, ebenen Stirnflächen aneinander an. Fig. 3 zeigt einen Werkzeughalter 1b gemäß der Erfindung, der sich von dem Werkzeughalter 1a lediglich dadurch unterscheidet, dass der Ringflansch 71 b und die Kupplungshülse 27b an Kugelabschnittflächen 85 bzw. 87 aneinander liegen, deren Zentrum 89 in der Mittelebene des Ringbunds 35b der

Kupplungshülse 27b liegt. Die auf Grund der elastischen Lagerung der Kupplungshülse 27b mögliche Schwenkbewegung der Kupplungshülse 27b führt deshalb auch bei Auslenkung der Kupplungshülse 27b nicht zu einem Spalt zwischen den aneinander liegenden Flächen des Ringflansches 71 b und der Kupplungshülse 27b.

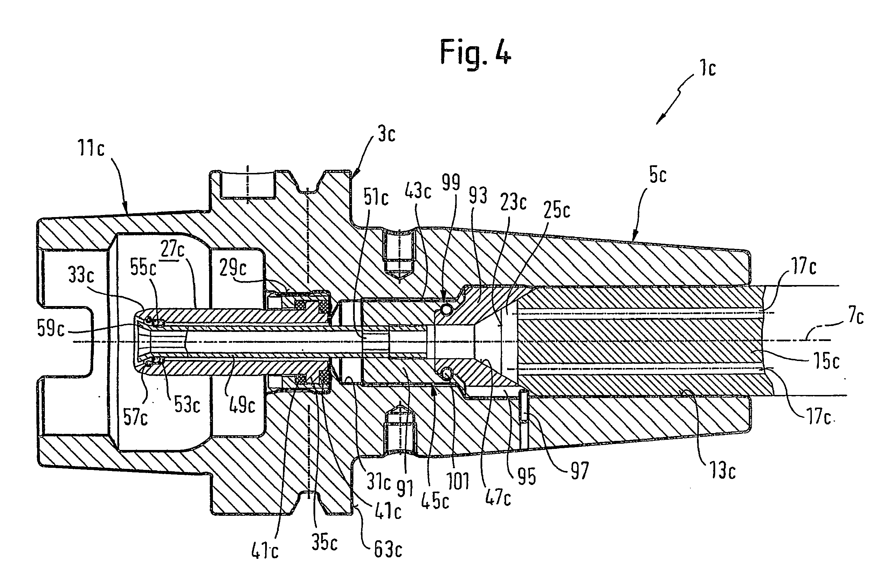

Fig. 4 zeigt eine Variante des anhand von Fig. 1 als Hintergrund der Erfindung erläuterten Werkzeughalters, die sich von diesem Werkzeughalter lediglich durch die Ausgestaltung ihrer Anschlaghülse 45c unterscheidet. Die Anschlaghülse 45c ist axial geteilt und hat einen ersten Hülsenteil 91, der das Außengewinde des Hülsenteils 45c trägt und mit diesem in das Innengewinde 43c der Durchgangsöffnung 31c eingeschraubt ist. Der erste Hülsenteil 91 ist darüber hinaus über die Formschlussfläche 51 c drehfest, aber axial beweglich mit dem Stellrohr 49c gekuppelt. Der zur Aufnahmeöffnung 13c benachbarte, zweite Hülsenteil 93 ragt in die Aufnahmeöffnung 13c hinein und bildet die konische Anschlagfläche 47c, mit der die Anschlaghülse 45c abdichtend gegen das konische Stirnende 23c des Werkzeugschafts 15c anliegt. Der zweite Hülsenteil 93 ist durch einen in einen Axialschlitz 95 am Außenumfang des zweiten Hülsenteil 93 eingreifenden Sicherungsstift 97 gegen Verdrehen gesichert, kann sich aber zusammen mit dem ersten Hülsenteil 91 axial verschieben. Zwischen den beiden Hülsenteilen ist ein reibungsminderndes Drehlager 99 mit mehreren am Umfang verteilten Wälzkörpern, hier in Form von Kugeln 101 angeordnet, über das sich die beiden Hülsenteile 91, 93 aneinander axial abstützen. Das Drehlager 99 mindert die beim abdichtenden Anliegen der Anschlagfläche 47c über das Stellrohr 49c aufzubringenden Drehmomente. Es versteht sich, dass anstelle eines Wälzlagers auch ein Gleitlager vorgesehen sein kann.

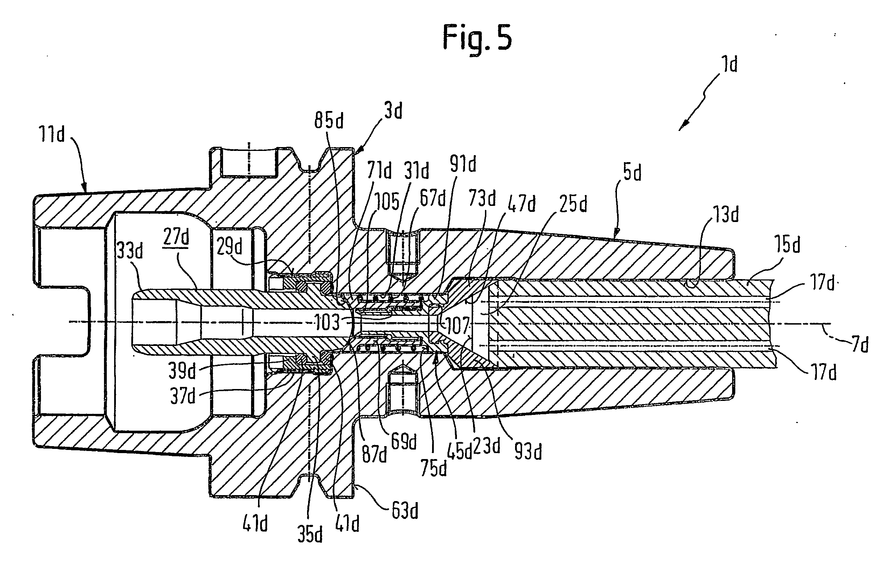

Fig. 5 zeigt einen Werkzeughalter 1d gemäß der Erfindung ähnlich dem Werkzeughalter 1b aus Fig. 3. Der Werkzeughalter 1d unterscheidet sich von dem Werkzeughalter 1b in erster Linie dadurch, dass seine Anschlaghülse 45d ähnlich dem Werkzeughalter 1c aus Fig. 4 zur leichteren Standardisierung zweiteilig
ausgebildet ist. Der erste Hülsenteil 91d bildet die Ringschulter 75b, an der die Schraubendruckfeder 67d mit ihrem einen Ende abgestützt ist, während der zweite Hülsenteil 93d die Anschlagfläche 47d bildet, mit der die Anschlaghülse 45d das Stirnende 23d des Werkzeugschafts 15d abdichtet. Anders als in der Ausführungsform der Fig. 3 greift der erste Hülsenteil 91 d teleskopierbar in den Rohransatz 69d ein und ist hier durch einen Rastring 103 auf ein vorbestimmtes Maß der axialen Teleskopierbewegung begrenzt. An seinem zur Kupplungshülse 27d zugewandten Ende ist der erste Hülsenteil 91d mit einem Einführkonus 105 für das Schmierfluid versehen. Der Rohrabschnitt 69d hat auch hier einen Ringflansch 71d, der über kugelabschnittförmige Lenkflächen 85d bzw. 87d an der Kupplungshülse 27d abgestützt ist. Die beiden Hülsenteile 91d und 93d sind betriebsmäßig fest aber lösbar miteinander verbunden, im dargestellten Ausführungsbeispiel über eine Bajonettverbindung 107.

Es versteht sich, dass bei den vorstehend erläuterten Ausgestaltungen, der Rohrabschnitt, wie er in Fig. 5 bei 69d dargestellt ist, gegebenenfalls auch einteilig mit der Kupplungshülse 27d verbunden sein kann, wenn deren radiale Bewegbarkeit hinreichend klein ist oder die Teleskopverbindung zwischen dem Rohransatz und der Anschlaghülse hinreichendes Bewegungsspiel erlaubt.

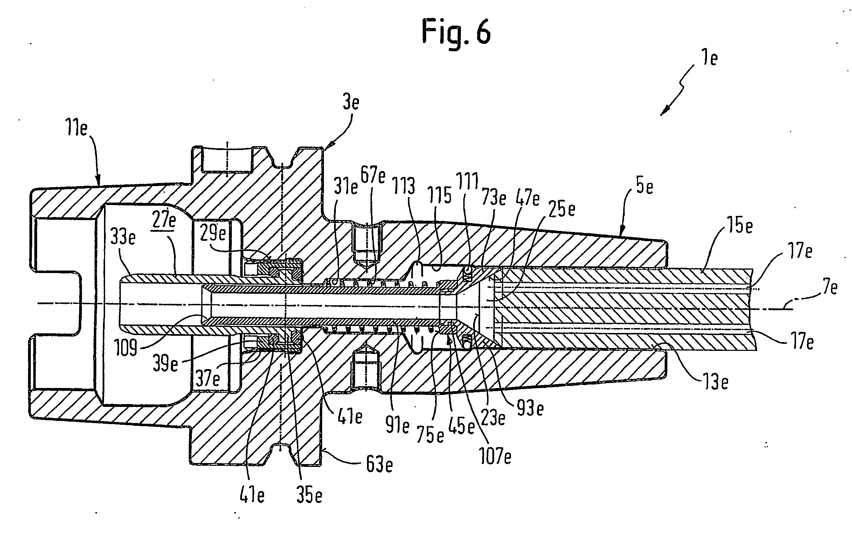

Fig. 6 zeigt ein weiteres Ausführungsbeispiel eines Werkzeughalters 1e gemäß der Erfindung, der sich von den vorangegangen erläuterten Werkzeughaltern der Fig. 2 bis 5 in erster Linie dadurch unterscheidet, dass die Anschlaghülse 45e unmittelbar, jedoch teleskopierbar in die Kupplungshülse 27e der Fluidkupplung hineinragt. Auch in dieser Ausgestaltung ist die Anschlaghülse 45e ähnlich der Variante der Fig. 5 zweiteilig ausgebildet und ragt mit ihrem die Abstützschulter 75e für die Schraubendruckfeder 67e bildenden ersten Hülsenteil 91e in die Kupplungshülse 27e hinein, wo sie an ihrem axialen Ende einen konischen Einführtrichter 109 für das Schmierfluid bildet. Der zweite Hülsenteil 93e, ist wiederum betriebsmäßig fest, beispielsweise über eine Bajonettkupplung 107e mit dem ersten Hülsenteil 91 e verbunden.

Um den Werkzeughalter 1e gegebenenfalls auch mit Hilfe eines Werkzeuglängen-Voreinstellgeräts voreinstellen zu können, das den Werkzeugschaft 15e mittels eines von der Seite des Kupplungsabschnitts 11 e durch die Kupplungshülse 27e und die Anschlaghülse 45e hindurch eingeführten Anschlagdorns positioniert, sind der Anschlaghülse 45e radial federnde Rastorgane 111, hier in Form radial federnder gegen die Aufnahmeöffnung 13e vorgespannter Kugeln an dem zweiten Hülsenteil 93e. Den Rastorganen 111 ist in der im Wesentlichen vollständig zurückgezogenen Stellung der Anschlaghülse 45e eine Ringnut 113 am Innenumfang der Aufnahmeöffnung 13e zugeordnet. Die Anordnung ist so getroffen, dass die Anschlaghülse 45e in der zurückgezogenen Stellung gegen die Ausschubkraft der Schraubendruckfeder 67e arretiert werden kann. In der zurückgezogenen Stellung der Anschlaghülse 45e kann dann der Werkzeugschaft 15e mittels des Anschlagdorns axial positioniert gespannt werden. Danach wird durch Ausüben einer Axialkraft auf die Anschlaghülse 45e die Verrastung gelöst, worauf die Schraubendruckfeder 67e die Anschlaghülse 45e abdichtend gegen das Schaftende 23e stellt. Zum Auslösen der Rastverbindung kann ein geeignetes Werkzeug durch die Kupplungshülse 27e eingeführt werden. Das Werkzeug kann gegebenenfalls Bestandteil der spindelseitigen Fluidkupplung sein, so dass beim Kuppeln der Fluidverbindung zugleich auch die Anschlaghülse 45e gegen den Werkzeugschaft 15e gestellt wird.

Die Rastorgane 111 können auch zur Ausschubverriegelung für die Anschlaghülse 45e genutzt werden. Die Aufnahmeöffnung 13e erweitert sich zur Durchgangsöffnung 31e hin in einem Bereich 115 unter Bildung einer Schulter, die das Ausschieben der Anschlaghülse 45e verhindert.

## Patentansprüche

1. Werkzeughalter für ein um eine Drehachse (7a,b,d,e) rotierend antreibbares Werkzeug (9a,b,d,e), dessen Schaft (15a,b,d,e) wenigstens einen längs der Drehachse (7a,b,d,e) sich erstreckenden Kanal (17a,b,d,e; 61 a,b,d,e) für ein Kühl- oder/und Schmierfluid enthält oder den Kanalquerschnitt zusammen mit dem Werkzeughalter (1 a,b,d,e) begrenzt, umfassend:
- einen Halterkörper (3a,b,d,e), der einen Werkzeugaufnahmeabschnitt (5a,b,d,e) mit einer zur Drehachse (7a,b,d,e) zentrischen Aufnahmeöffnung (13a,b,d,e) für die drehfeste aber lösbare Aufnahme des Werkzeugschafts (15a,b,d,e), einen Kupplungsabschnitt (11a,b,d,e) für die drehfeste aber lösbare Verbindung mit einer rotierend angetriebenen Antriebsspindel und eine zur Aufnahmeöffnung (13a,b,d,e) gleichachsige und in diese übergehende, zur Seite des Kupplungsabschnitts (11a,b,d,e) offene Durchgangsöffnung (31 a,b,d,e) aufweist,
- eine in der Durchgangsöffnung (31a,b,d,e) axial bewegbar angeordnete Anschlaghülse (45a,b,d,e), die auf der Seite der Aufnahmeöffnung (13a,b,d,e) eine Anschlagfläche (47a,b,d,e) für das Stirnende des Werkzeugschafts (15a,b,d,e) bildet und
- eine zur Drehachse (7a,b,d,e) zentrische Fluidkupplung (27a,b,d,e, 33a,b,d,e) auf der Seite des Kupplungsabschnitts (11a,b,d,e) für die Zuführung des Kühl- oder/und Schmierfluids, welche Fluidkupplung eine gleichachsig zur Durchgangsöffnung (31a,b,d,e) zur Seite des Kupplungsabschnitts (11a,b,d,e) hin von dem Halterkörper (3a,b,d,e) abstehende, an dem Halterkörper (3a,b,d,e) abnehmbar befestigte Kupplungshülse (27a,b,d,e) umfasst,
wobei der Anschlaghülse (45a,b,d,e) eine Feder (67, 67b,d,e) zugeordnet ist, **dadurch gekennzeichnet, dass** die Feder (67,67b,d,e) die in der Durchgangsöffnung (31a,b,d) axial verschiebbar sitzende Anschlaghülse (45a,b,d,e) relativ zu dem Halterkörper (3a,b,d,e) zur Aufnahmeöffnung (13a,b,d,e) hin schiebt und vorspannt,
dass die Kupplungshülse (27a,b,d,e, 33a,b,d) entweder über einen in der Durchgangsöffnung (31a,b,d) enthaltenen Rohrabschnitt (69;69b,d) mit der Anschlaghülse (45a,b,d) verbunden ist und der Rohrabschnitt (69;69b,d) und die Anschlaghülse (45a,b,d) mittels der Feder (67, 67b,d) axial teleskopierbar einander axial überlappen oder die Anschlaghülse (45e) mittels der Feder (67e) axial teleskopierbar in die Kupplungshülse (27e) axial eingreift.

2. Werkzeughalter mit einem Rohrabschnitt nach Anspruch 1, **dadurch gekennzeichnet, dass** der Rohrabschnitt (69; 69b) an seinem der Fluidkupplung (27a,b,d, 33a,b,d) benachbarten Ende einen Ringflansch (71; 71b,d) und die Anschlaghülse (45a,b) an ihrem Außenmantel eine Ringschulter (75; 75b,d) aufweisen und dass die Feder (67; 67b,d) zwischen dem Ringflansch (71; 71b,d) und der Ringschulter (75; 75b,d) eingespannt ist.

3. Werkzeughalter nach Anspruch 2, **dadurch gekennzeichnet, dass** die Anschlaghülse (45d) und der Rohrabschnitt (69d) einander zugeordnete Wegbegrenzungsanschläge aufweisen, die Expansionsbewegung der Anschlaghülse (45d) relativ zum Rohrabschnitt (69d) begrenzen.

4. Werkzeughalter mit einem Rohrabschnitt nach einem der Ansprüche 1 bis 3, **dadurch gekennzeichnet, dass** der Rohrabschnitt (69; 69b,d) mit einer ringförmigen Stirnfläche lose an einer relativ zum Halterkörper (3a,b,d) festen Ringfläche axial abgestützt ist.

5. Werkzeughalter nach Anspruch 4, **dadurch gekennzeichnet, dass** das der Durchgangsöffnung (13a,b,d) axial zugewandten Ende der Ringflansch (71;71b,d) an der kupplungshülse (27a,b,d) abgestützt ist.

6. Werkzeughalter nach Anspruch 4 oder 5, **dadurch gekennzeichnet, dass** die ringförmige Stirnfläche des Rohrabschnitts (69a) und die relativ zum Halterkörper (3a) feste Ringfläche als ebene, achsnormale Flächen ausgebildet sind.

7. Werkzeughalter nach Anspruch 4 oder 5, **dadurch gekennzeichnet, dass** die ringförmige Stirnfläche des Rohrabschnitts (69b,d) und die relativ zum Halterkörper (3b,d) feste Ringfläche als einander zugeordnete, zentrumsgleiche kugelabschnittsförmige Gelenkflächen (85, 87, 85d, 87d) ausgebildet sind.

8. Werkzeughalter nach Anspruch 7, **dadurch gekennzeichnet, dass** die Kupplungshülse (27b,d) der Fluidkupplung (27b,d, 33b,d) im Wesentlichen um das Zentrum (89, 89d) der Gelenkflächen elastisch auslenkbar an dem Halterkörper (3b,d) befestigt ist.

9. Werkzeughalter mit einem Rohrabschnitt nach Anspruch 1, **dadurch gekennzeichnet, dass** der Rohrabschnitt fest mit der Kupplungshülse verbunden ist, insbesondere einteilig an ihr angeformt ist.

10. Werkzeughalter nach einem der Ansprüche 1 bis 9, **dadurch gekennzeichnet, dass** die Anschlaghülse (45d,e) zwei betriebsmäßig axial fixiert miteinander verbundene Hülsenteile (91d,e, 93d,e) aufweist, und dass die Feder (67d,e) an einem ersten (91d,e) der Hülsenteile axial abgestützt ist und der zweite (93d,e) der Hülsenteile die Anschlagfläche bildet.

11. Werkzeughalter nach einem der Ansprüche 1 bis 10, **dadurch gekennzeichnet, dass** der Anschlaghülse (45e) wenigstens ein die Anschlaghülse (45e) in wenigstens einer Axialposition relativ zu dem Halterkörper (3e) lösbar jedoch mit einer von der Feder (67e) allein nicht überwindbaren Haltekraft verrastendes Rastorgan (111) zugeordnet ist.

12. Werkzeughalter nach Anspruch 11, **dadurch gekennzeichnet, dass** das Rastorgan (111) die Anschlaghülse (45e) in einer im Wesentlichen vollständig zurückgezogenen Position oder/und einer im Wesentlichen vollständig ausgeschobenen Position verrastet.

13. Werkzeughalter mit einem Rohrabschnitt nach einem der Ansprüche 1 bis 12, **dadurch gekennzeichnet, dass** die Durchgangsöffnung (31a,b) als Stufenöffnung ausgebildet ist, deren Innendurchmesser zur Aufnahmeöffnung (13a,b) hin in wenigstens einer Stufe abnimmt und am Übergang zur Aufnahmeöffnung (13a,b) eine Ringschulter (77a,b) für die Bewegungsbegrenzung der Anschlaghülse (45a,b) bildet und dass der Halterkörper (3a,b) auf der im Durchmesser kleineren Seite der Durchgangsöffnung (13a,b) abnehmbare Anschlagmittel (27a,b) für den Rohrabschnitt (69; 69b) aufweist.

14. Werkzeughalter nach einem der Ansprüche 1 bis 13, **dadurch gekennzeichnet, dass** die Durchgangsöffnung (31a,b,d,e) als Stufenöffnung ausgebildet ist, deren Innendurchmesser zur Aufnahmeöffnung (13a,b,d,e) hin in wenigstens einer Stufe (81; 81 b,d,e) zunimmt und dass der Halterkörper (3a,b,d,e) insbesondere auf der im Durchmesser größeren Seite Anschlagmittel für die Anschlaghülse (45a,b,d,e) aufweist.

15. Werkzeughalter nach einem der Ansprüche 1 bis 14, **dadurch gekennzeichnet, dass** die Innenfläche der Anschlaghülse (45a,b,d,e) auf der Seite der Aufnahmeöffnung (13a,b,d,e) einen zur Aufnahmeöffnung (13a,b,d,e) hin sich erweiternden Konus (47a,b,d,e) bildet.

16. Werkzeughalter nach einem der Ansprüche 1 bis 15, **dadurch gekennzeichnet, dass** zumindest die Fluidkupplung (27a,b,d,e, 33a,b,d,e) und die Anschlaghülse (45a,b,d,e) sowie gegebenenfalls auch der Rohrabschnitt (69; 69b,d) einen von der Seite des Kupplungsabschnitts (11a,b,d,e) bis zur Aufnahmeöffnung (13a,b,d,e) durchgehenden, zur Drehachse (7a,b,d,e) koaxialen Aufnahmekanal für einen axial einstellbaren Anschlagdorn eines Werkzeuglängen-Einstellgeräts bilden.

17. Werkzeughalter nach einem der Ansprüche 1 bis 16, **dadurch gekennzeichnet, dass** der Werkzeughalter (1) ein Werkzeughalter vom Schrumpffuttertyp oder hydraulischen Dehnspannfuttertyp ist.

18. Werkzeughaltersatz umfassend mehrere Werkzeughalter (1a,b) mit einem Rohrabschnitt nach einem der Ansprüche 1 bis 17, **dadurch gekennzeichnet, dass** die Aufnahmeöffnungen (13a,b,d) der Werkzeughalter (1a,b,d) unterschiedlich große Durchmesser haben, während die Durchgangsöffnungen (13a,b,d) der Werkzeughalter (1a,b,d) im Bereich der Rohrabschnitte (69; 69b,d) sowie die Rohrabschnitte (69; 69b,d) einheitlichen Durchmesser haben.

## Claims

1. Tool holder for a tool (9a, b, d, e) which is to be driven so as to rotate about an axis of rotation (7a, b, d, e), the shaft (15a, b, d, e) of which comprises at least one channel (17a, b, d, e; 61a, b, d, e) extending along the axis of rotation (7a, b, d, e) for a cooling or/and lubricating fluid or delimits the channel cross section together with the tool holder (1a, b, d, e) comprising:
- a support body (3a, b, d, e) which has a tool mounting section (5a, b, d, e) with a mounting opening (13a, b, d, e), which is central relative to the axis of rotation (7a, b, d, e), for mounting the tool shaft (15a, b, d, e) in a rotationally rigid, but releasable manner, a coupling section (11a, b, d, e) for the rotationally rigid, but releasable connection with a rotary driven drive spindle and a through opening (31a, b, d, e) which is equiaxial with the mounting opening (13a, b, d, e), passing into this and being open towards the side of the coupling section (11a, b, d, e),
- a stop sleeve (45a,b,d,e) which is arranged so as to be axially mobile in the through opening (31a, b, d, e) and forms a stop face (47a, b, d, e) for the face end of the tool shaft (15a, b, d, e) on the side of the mounting opening (13a, b, d, e) and,
- a fluid coupling (27a, b, d, e, 33a, b, d, e) which is central relative to the axis of rotation (7a, b, d, e) on the side of the coupling section (11a, b, d, e) for supplying the cooling or/and lubricating fluid, which fluid coupling comprises a coupling sleeve (27a, b, d, e) protruding in the same axis as the through opening (31a, b, d, e) to the side of the coupling section (11a, b, d, e) from the support body (3a, b, d, e) and secured detachable to the support body (3a, b, d, e),
wherein a spring (67, 67b, d, e) is assigned to the stop sleeve (45a, b, d, e), **characterised in that** the spring (67, 67b, d, e) pushes and pretensions the stop sleeve (45a, b, d, e), which sits axially displaceably in the through opening (31a, b, d), relative to the support body (3a, b, d, e) in the direction of the mounting opening (13a, b, d, e),
**in that** the coupling sleeve (27a, b, d, e, 33a, b, d) is connected to the stop sleeve (45a, b, d) either by a tube section (69; 69b, d) contained in the through opening (31a, b, d) and the tube section (69; 69b, d) and the stop sleeve (45a, b, d) overlap one another axially telescopically by means of the spring (67, 67b, d) or the stop sleeve (45e) engages axially by means of the spring (67e) telescopically into the coupling sleeve (27e).

2. Tool holder with a pipe section according to claim 1, **characterised in that** the tube section (69; 69b) at its end adjacent to the fluid coupling (27a, b, d, 33a, b, d) comprises an annular flange (71; 71b, d) and the stop sleeve (45a, b) on its outer casing comprises an annular shoulder (75; 75b, d) and **in that** the spring (67; 67b, d) is clamped between the annular flange (71; 71b, d) and the annular shoulder (75; 75b, d).

3. Tool holder according to claim 2, **characterised in that** the stop sleeve (45d) and the tube section (69d) comprise movement limiting stops assigned to one another which limit the expansion movement of the stop sleeve (45d) relative to the tube section (69d).

4. Tool holder with a tube section according to one of claims 1 to 3, **characterised in that** the tube section (69; 69b, d) with an annular end face is supported axially loosely on an annular face fixed relative to the support body (3a, b, d).

5. Tool holder according to claim 4, **characterised in that** the end of the annular flange (71; 71b, d) axially facing towards the through opening (13a, b, d) is supported on the coupling sleeve (27a, b, d).

6. Tool holder according to claim 4 or 5, **characterised in that** the annular end face of the tube section (69a) and the annular face fixed relative to the support body (3a) are configured as planar, axially normal surfaces.

7. Tool holder according to claim 4 or 5, **characterised in that** the annular end face of the tube section (69b, d) and the annular face fixed relative to the support body (3b, d) are configured as equicentral spherical segment-like joint surfaces (85, 87, 85d, 87d) assigned to one another.

8. Tool holder according to claim 7, **characterised in that** the coupling sleeve (27b, d) of the fluid coupling (27b, d, 33b, d) is secured essentially about the centre (89, 89d) of the joint surfaces to be elastically deflectable on the support body (3b, d).

9. Tool holder with a tube section according to claim 1, **characterised in that** the tube section is connected securely to the coupling sleeve, in particular is formed in one piece thereon.

10. Tool holder with a tube section according to one of claims 1 to 9, **characterised in that** the stop sleeve (45d, e) comprises two sleeve parts (91d, e, 93d, e) fixed axially to one another in operation, and **in that** the spring (67d, e) is supported axially on a first (91d, e) of the sleeve parts and the second (93d, e) of the sleeve parts forms the stop surface.

11. Tool holder according to one of claims 1 to 10, **characterised in that** at least one locking element (111), which locks the stop sleeve (45e) in at least one axial position relative to the support body (3e) in a detachable manner but with a holding force that cannot be overcome by the spring (67e) alone, is assigned to the stop sleeve (45e).

12. Tool holder according to claim 11, **characterised in that** the locking element (111) locks the stop sleeve (45e) in an essentially fully retracted position and/or an essentially fully pushed out position.

13. Tool holder with a tube section according to one of claims 1 to 12, **characterised in that** the through opening (31a, b) is configured as a stepped opening, the inner diameter of which decreases towards the mounting opening (13a, b) in at least one step and at the transition with the mounting opening (13a, b) forms an annular shoulder (77a, b) for delimiting the movement of the stop sleeve (45a, b) and **in that** the support body (3a, b) on the side of the through opening (13a, b) with a smaller diameter comprises removable stop means (27a, b) for the tube section (69; 69b).

14. Tool holder according to one of claims 1 to 13, **characterised in that** the through opening (31a, b, d, e) is configured as a stepped opening, the inner diameter of which increases towards the mounting opening (13a, b, d, e) in at least one step (81; 81b, d, e) and **in that** the support body (3a, b, d, e), in particular on the side with a larger diameter, comprises stop means for the stop sleeve (45a, b, d, e).

15. Tool holder according to one of claims 1 to 14, **characterised in that** the inner surface of the stop sleeve (45a, b, d, e) on the side of the mounting opening (13a, b, d, e) forms a cone (47a, b, d, e) widening towards the mounting opening (13a, b, d, e).

16. Tool holder according to one of claims 1 to 15, **characterised in that** at least the fluid coupling (27a, b, d, e, 33a, b, d, e) and the stop sleeve (45a, b, d, e) and possibly also the tube section (69; 69b, d) form a mounting channel for an axially adjustable stop pin of a tool length adjusting device which mounting channel is continuous from the side of the coupling section (11a, b, d, e) to the mounting opening (13a, b, d, e) and coaxial to the axis of rotation (7a, b, d, e).

17. Tool holder according to one of claims 1 to 16, **characterised in that** the tool holder (1) is a tool holder of the shrink-fit chuck type or hydraulic expansion chuck type.

18. Tool holder set comprising a plurality of tool holders (1a, b) with a tube section according to one of claims 1 to 17, **characterised in that** the mounting openings (13a, b, d) of the tool holders (1a, b, d) have diameters of different sizes, whereas the through openings (13a, b, d) of the tool holders (1a, b, d) in the region of tube sections (69; 69b, d) and tube sections (69; 69b, d) have a uniform diameter.

## Revendications

1. Porte-outil pour un outil (9a, b, d, e) à entraîner en rotation autour d'un axe de rotation (7a, b, d, e), dont la queue (15a, b, d, e) comporte au moins un canal (17a, b, d, e; 81a, b, d, e) s'étendant le long de l'axe de rotation (7a, b, d, e) pour un liquide de refroidissement et/ou de lubrification ou limite la section transversale du canal ensemble avec le porte-outil (1a, b, d, e), comprenant:
- un corps de support (3a, b, d, e), qui présente une partie de réception d'outil (5a, b, d, e) avec une ouverture de réception (13a, b, d, e) centrée par rapport à l'axe de rotation (7a, b, d, e) pour la réception solidaire en rotation mais séparable de la queue d'outil (15a, b, d, e), une partie de couplage (11a, b, d, e) pour l'assemblage solidaire en rotation mais séparable avec une broche d'entraînement entraînée en rotation et une ouverture de passage (31a, b, d, e) ouverte vers le côté de la partie de couplage (11a, b, d, e), coaxiale à l'ouverture de réception (13a, b, d, e) et se prolongeant dans celle-ci,
- une douille de butée (45a, b, d, e) disposée de façon mobile axialement dans l'ouverture de passage (31a, b, d, e), qui forme sur le côté de l'ouverture de réception (13a, b, d, e) une face de butée (47a, b, d, e) pour l'extrémité frontale de la queue d'outil (15a, b, d, e), et
- un couplage de liquide (27a, b, d, e, 33a, b, d, e) centré par rapport à l'axe de rotation (7a, b, d, e) sur le côté de la partie de couplage (11a, b, d, e) pour l'arrivée du liquide de refroidissement et/ou de lubrification, couplage de liquide qui comprend une douille de couplage (27a, b, d, e) saillante coaxialement à l'ouverture de passage (31a, b, d, e) vers le côté de la partie de couplage (11a, b, d, e) à partir du corps de support (3a, b, d, e), fixée de façon démontable au corps de support (3a, b, d, e) dans lequel un ressort (67, 67b, d, e) est associé à la douille de butée (45a, b, d, e),
**caractérisé en ce que** le ressort (67, 67b, d, e) déplace la douille de butée (45a, b, d, e), montée de façon déplaçable axialement dans l'ouverture de passage (31a, b, d), par rapport au corps de support (3a, b, d, e) en direction de l'ouverture de réception (13a, b, d, e) et la précontraint, **en ce que** soit la douille de couplage (27a, b, d, e, 33a, b, d, e) est reliée à la douille de butée (45a, b, d) au moyen d'une partie de tube (69; 69b, d) contenue dans l'ouverture de passage (31a, b, d) et la partie de tube (69; 69b, d) et la douille de butée (45a, b, d) se chevauchent axialement l'une l'autre de façon télescopique axialement au moyen du ressort (67, 67b, d), soit la douille de butée (45e) s'engage axialement dans la douille de couplage (27e) de façon télescopique axialement au moyen du ressort (67e).

2. Porte-outil avec une partie de tube selon la revendication 1, **caractérisé en ce que** la partie de tube (69; 69b) présente à son extrémité proche du couplage de liquide (27a, b, d, 33a, b, d) une bride annulaire (71; 71b, d) et la douille de butée (45a, b) présente à sa surface extérieure un épaulement annulaire (75; 75b, d), et **en ce que** le ressort (67; 67b, d) est comprimé entre la bride annulaire (71; 71b, d) et l'épaulement annulaire (75; 75b, d).

3. Porte-outil selon la revendication 2, **caractérisé en ce que** la douille de butée (45d) et la partie de tube (69d) présentent des butées de limitation de course associées l'une à l'autre, qui limitent le mouvement d'expansion de la douille de butée (45d) par rapport à la partie de tube (69d).

4. Porte-outil avec une partie de tube selon l'une quelconque des revendications 1 à 3, **caractérisé en ce que** la partie de tube (69; 69b, d) est appuyée axialement avec une face frontale annulaire librement sur une face annulaire fixe par rapport au corps de support (3a, b, d).

5. Porte-outil selon la revendication 4, **caractérisé en ce que** l'extrémité de la bride annulaire (71; 71b, d) tournée axialement vers l'ouverture de passage (13a, b, d) est appuyée sur la douille de couplage (27a, b, d).

6. Porte-outil selon la revendication 4 ou 5, **caractérisé en ce que** la face frontale annulaire de la partie de tube (69a) et la face annulaire fixe par rapport au corps de support (3a) sont constituées par des faces planes normales à l'axe.

7. Porte-outil selon la revendication 4 ou 5, **caractérisé en ce que** la face frontale annulaire de la partie de tube (69b, d) et la face annulaire fixe par rapport au corps de support (3b, d) sont constituées par des faces d'articulation (85, 87, 85d, 87d) en forme de parties de sphère, de même centre et associées l'une à l'autre.

8. Porte-outil selon la revendication 7, **caractérisé en ce que** 1a douille de couplage (27b, d) du couplage de liquide (27b, d, 33b, d) est fixée au corps de support (3b, d) d'une façon élastiquement pivotante essentiellement autour du centre (89, 89d) des faces d'articulation.

9. Porte-outil avec une partie de tube selon la revendication 1, **caractérisé en ce que** la partie de tube est reliée de façon fixe à la douille de couplage, notamment est formée d'une seule pièce sur celle-ci.

10. Porte-outil avec une partie de tube selon l'une quelconque des revendications 1 à 9, **caractérisé en ce que** la douille de butée (45d, e) comporte deux parties de douille (91d, e, 93d, e) assemblées l'une à l'autre de manière axialement fixée en accord avec le fonctionnement, et **en ce que** le ressort (67d, e) est appuyé axialement sur une première (91d, e) des parties de douille et la deuxième (93d, e) des parties de douille forme la face de butée.

11. Porte-outil selon l'une quelconque des revendications 1 à 10, **caractérisé en ce qu'**au moins un organe d'encliquetage (111) accrochant la douille de butée (45e) dans au moins une position axiale par rapport au corps de support (3e) de façon séparable mais avec une force de retenue insurmontable pour le ressort seul (67e), est associé à la douille de butée (45e).

12. Porte-outil selon la revendication 11, **caractérisé en ce que** l'organe d'encliquetage (111) accroche la douille de butée (45e) dans une position essentiellement complètement rentrée et/ou dans une position essentiellement complètement étendue.

13. Porte-outil avec une partie de tube selon l'une quelconque des revendications 1 à 12, **caractérisé en ce que** l'ouverture de passage (31a, b) est formée par une ouverture étagée, dont le diamètre intérieur diminue en direction de l'ouverture de réception (13a, b) en au moins un gradin et forme à la transition avec l'ouverture de réception (13a, b) un épaulement annulaire (77a, b) pour la limitation du mouvement de la douille de butée (45a, b) et **en ce que** le corps de support (3a, b) forme sur le côté de plus petit diamètre de l'ouverture de passage (13a, b) des moyens de butée démontables (27a, b) pour la partie de tube (69; 69b).

14. Porte-outil selon l'une quelconque des revendications 1 à 13, **caractérisé en ce que** l'ouverture de passage (31a, b, d, e) est formée par une ouverture étagée, dont le diamètre intérieur augmente en direction de l'ouverture de réception (13a, b, d, e) en au moins un gradin (81; 81b, d, e) et **en ce que** le corps de support (3a, b, d, e) présente en particulier sur le côté de plus grand diamètre des moyens de butée pour la douille de butée (45a, b, d, e).

15. Porte-outil selon l'une quelconque des revendications 1 à 14, **caractérisé en ce que** la face intérieure de la douille de butée (45a, b, d, e) forme sur le côté de l'ouverture de réception (13a, b, d, e) un cône (47a, b, d, e) s'évasant en direction de l'ouverture de réception (13a, b, d, e).

16. Porte-outil selon l'une quelconque des revendications 1 à 15, **caractérisé en ce qu'**au moins le couplage de liquide (27a, b, d, e, 33a, b, d, e) et la douille de butée (45a, b, d, e) ainsi qu'éventuellement aussi la partie de tube (69; 69b, d) forment un canal de réception coaxial à l'axe de rotation (7a, b, d, e), continu depuis le côté de la partie de couplage (11a, b, d, e) jusqu'à l'ouverture de réception (13a, b, d, e), pour un mandrin de butée axialement réglable d'un appareil de réglage de longueur d'outil.

17. Porte-outil selon l'une quelconque des revendications 1 à 16, **caractérisé en ce que** le porte-outil (1) est un porte-outil du type à mandrin rétractable ou du type à mandrin expansible hydraulique.

18. Ensemble de porte-outil comprenant plusieurs porte-outil (1a, b) avec une partie de tube selon l'une quelconque des revendications 1 à 17, **caractérisé en ce que** les ouvertures de réception (13a, b, d) des porte-outil (1a, b, d) présentent des diamètres de grandeur différente, tandis que les ouvertures de passage (13a, b, d) des porte-outil (1a, b, d) dans la région des parties de tube (69; 69b, d) ainsi que les parties de tube (69; 69b, d) présentent des diamètres unitaires.
